# EUROPEAN PATENT APPLICATION

(11) **EP 1 010 957 A2**
(43) Date of publication of application: **21.06.2000**
(21) Application number: 99310105.4
(22) Date of filing: 15.12.1999
(51) Int. Cl.: F25D 3/08, B65D 81/18, B65D 21/02

(54) **Re-usable insulated container**

(30) Priority: 15.12.1998 GB 9827694
(71) Applicant: Reepak Ltd., Aberdeen AB11 5QB (GB)
(72) Inventor: McBay, Ronald E., Aberdeen, AB11 5QB (GB); Proctor, Calum, Abedeen, AB11 5QB (GB)
(74) Representative: McKechnie, Neil Henry

(57) **Abstract**

Reusable insulated box (100) for fish storage and transportation. The box lid contains an integral refreezable cold pack (3) and is fully reusable. Lids (2) can be stored in a freezer. Box is stackable for easy storage and benefits users through cost reductions in packaging, refrigeration in transit, storage ice and waste disposal costs.

## Description

This invention relates to a re-usable insulated container.

In the fish processing and distribution industry, refrigeration is vital to maintain fish in a fresh condition whilst they are processed and transported to supermarkets, other fresh produce outlets and manufacturers of fish-based products.

Fish distributors purchase fresh fish at fish markets, transport them to a processing factory, fillet them and then package them for forward transportation under refrigerated conditions.

Currently, the standard procedure within the industry for packaging and transporting processed fish is to pack them first into a polythene bag and then to place this polythene bag into a second container, a polystyrene box which contains ice. A lid is then placed on the container and the whole package is then placed within a refrigerator.

These boxes are subsequently collected for onward delivery to users and transported within refrigerated vehicles. On arrival, the boxes are unloaded by the user. The polystyrene boxes are then disposed of through normal commercial waste procedures and the ice is deposited into the sewer system.

This procedure has become less and less satisfactory in recent years for several reasons.

Firstly, the costs associated with the refrigeration process and associated consumables are high. Refrigerated lorries are expensive to operate. Ice is expensive; what is more, due to new UK and European legislation, fish processors are expecting their water supply and effluent costs to increase very substantially in the near future. The costs both of purchasing and disposing of polythene bags and bulky polystyrene packaging is also high.

Secondly, the current process for packaging fish requires several steps: packing the fish into bags, packing ice into boxes and packing the bags of fish into the ice-filled polystyrene containers. This takes a significant quantity of time and is therefore costly.

Thirdly, the procedure is wasteful of natural resources. The large number of polystyrene boxes discarded by the industry consume considerable space in landfill sites. In addition to this, the ice discarded down the sewer system and contaminated with fish brie represents a substantial quantity of effluent. Furthermore, refrigerated lorries typically emit more pollution than non-refrigerated lorries.

It would be advantageous to devise a means of packaging and transporting fish which costs less. Any savings in the substantial costs of purchasing packaging, making ice, using refrigerated lorries, labour costs or waste disposal costs would be greatly welcomed in the financially hard-pressed fish processing industry.

In particular, it would be advantageous to reduce costs through reducing the number of steps required in the packing process.

The cost of ice might be reduced by using conventional reusable cold packs. These cold packs are in common use for transporting refrigerated products in other industries and consist of a pre-cooled liquid, usually a freezable liquid, sealed in an appropriate package. They act as a reservoir to absorb heat and therefore reduce the rate at which the contents of the package warm up. However, were one or more of these packs to be simply placed within the fish box instead of ice, this would be inconvenient as they would represent an additional separate component to the other parts of the container and it would take a significant amount of time to place these within the box and subsequently to clean them. It would therefore be advantageous if a more convenient way of using cold packs could be found.

Furthermore, it would be beneficial to the environment to devise a means of packaging and transporting fish which consumed fewer natural resources and reduced waste production.

According to the present invention there is provided an insulated container (100) having an inside surface, the inside surface being characterized in that is has a temperature regulation means (3) affixed thereon; the temperature regulation means comprising a heat-absorbent material the temperature of which can be adjusted before use; the temperature regulation means acting to slow the rate at which the temperature within the insulated container reverts to the temperature outside the insulated container.

Preferably, the temperature regulation means is an enclosed refreezable liquid.

Preferably, the insulated container is stackable.

Preferably, the insulated container is made from two parts, with the temperature regulation means affixed to one part.

More preferably, the insulated container consists of a box (1) and a lid (2).

Preferably also, the box is adapted to be stackable with and without the lid.

Preferably also, the box is stackable in such a way that boxes may nest inside each other and so take up less space than if they were not nesting.

Most preferably, the temperature regulation means is affixed to the lid.

The insulated container may be double skinned.

The insulated container may have an additional layer between the temperature regulation means and the interior of the container.

Preferably, the insulated container is reusable.

Typically, the insulated container is shaped so as to aid cleaning.

Preferably, the insulated container does not having extrusions wherein microbes can readily gather.

Preferably, the insulated container is recyclable.

Preferably, the base (7) of the insulated container incorporates spacers (9) to provide a raised floor.

An example embodiment of the invention will now be described with reference to the following Figures in which:
Figure 1 shows a perspective view of the example embodiment;
Figure 2 shows a plan view of the container from above;
Figure 3 shows a plan view of the container from underneath;
Figure 4 shows plan views from either side of the two opposing small ends of the container; and
Figure 5 shows a plan view of the inside of the lid.

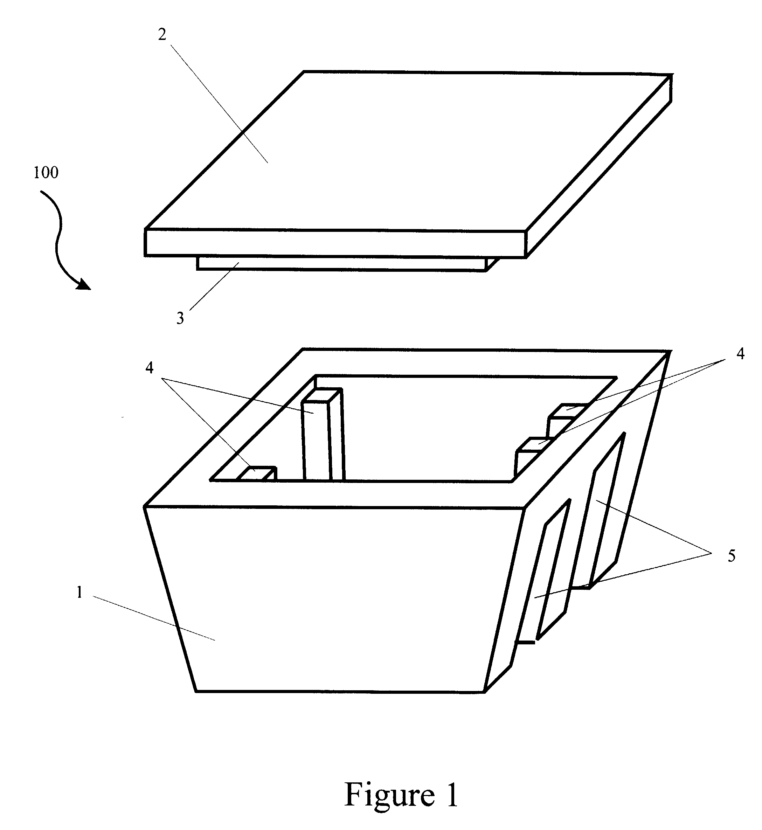

Figure 1 shows an perspective view of the example re-usable insulated container 100. The insulated container comprises a box 1 to which can be fitted a lid 2. The insulated container has an inner surface. The inner surface of the lid incorporates a re-usable cold pack 3 which absorbs heat.

The box tapers towards the base so that boxes may be nested within each other when they are stacked, hence saving space when they are empty. Furthermore, there are protrusions 4 and corresponding indentations 5 which ensure that the boxes can only be stacked in one orientation.

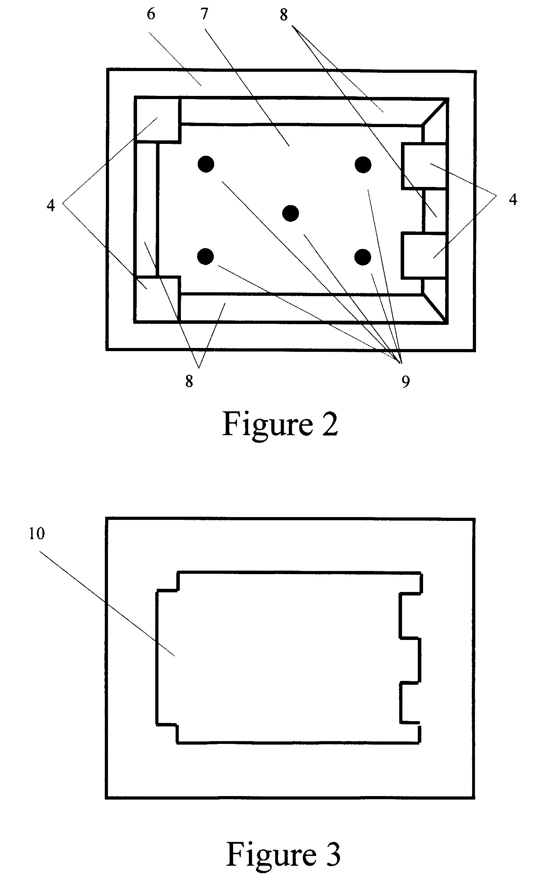

Figure 2 is a plan view of the box from above, showing the upper rim 6, inside base 7, inside walls 8 and protrusions 4. On the base are mounted five spacers 9 in the form of knobs which serve to keep the contents from sitting in any liquid which may be present at the bottom of the box.

Figure 3 is a plan view of the box from beneath, showing the external surface of the base 10.

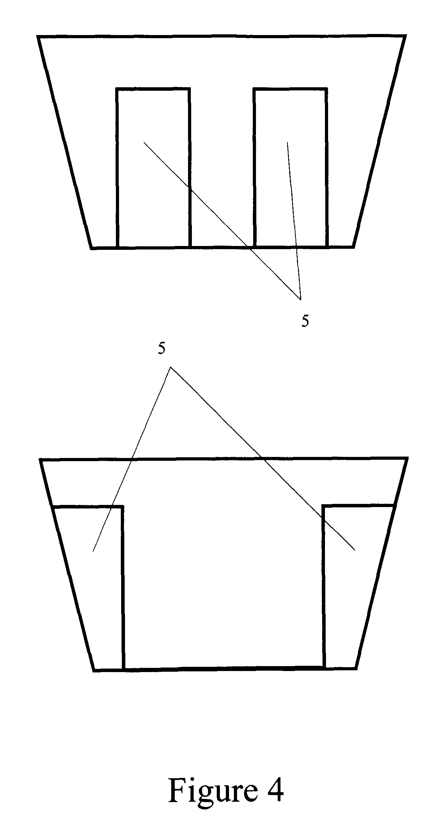

Figure 4 shows the two opposing small ends of the container and the example locations of the indentations 5 which are designed to correspond with the protrusions 4 of figures 1-2 when boxes are stacked upon each other. The boxes may also be stacked upon each other when the lids are in place.

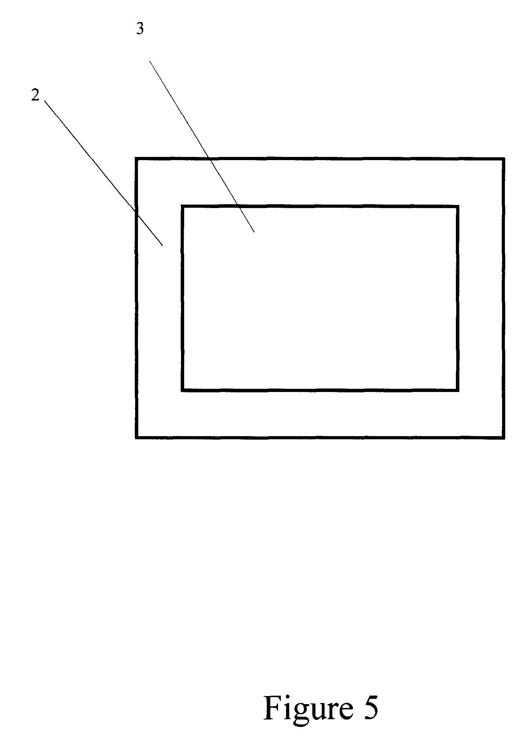

Figure 5 shows a plan view of the inside of the lid 2 to which is attached a cold-pack 3 containing a freezable liquid, such as salt water, which absorbs heat.

This type of container may be used by the fishing industry as follows.

These boxes can be cleaned in-house by fish processors and re-used. Lids would be stored in a freezer. After filleting, the fish would be packed into the boxes, with absorbent towel placed at the bottom of the box to collect excess brie. The lid would then be fitted.

This would not only be cheaper for the end-user by allowing them to reuse containers rather than purchase fresh ones each time and avoiding the costs of ice manufacture and polythene bags, it would require less labour by cutting out the steps of filling the box with ice and packing the fish in polythene bags.

The containers would then be transported on to the end user. Depending on the length of the journey, there would be no requirement for refrigerated lorries which would cut costs.

Once they had arrived at the end user, the boxes could be conveniently unloaded. Boxes and lids can be separated and stacked. Boxes can then be loaded into a lorry for the return journey. The only waste disposal required would be the absorbent towel, which would also be manufactured from a bio-degradable material.

Use of the example box in the procedure described would reduce fish processors labour, material and disposal costs and reduce the production of waste, benefiting the environment. The use of a reusable cold-pack avoids the cost of water to make ice and, by incorporating this cold-pack into the container lid, the process of packaging fish for transportation is made quicker and more convenient.

The device may also be used with a lid that does not have an integrated cold-pack and still display cost benefits and environmental benefits.

Although this example embodiment describes a container adapted to keep fish cold, it may be applied to any application where temperature regulation is important and may also be adapted to keep products hot instead of cold. In general, the cold-pack consists of an enclosure with a heat-absorbent material therein. The temperature of this heat-absorbent material is pre-set (in this example, by refrigerating the lids) and so the flow of heat into or out of the heat-absorbent material acts to slow the rate at which the temperature within the insulated container reverts to the temperature outside the insulated container.

In an alternative configuration, there is another layer of the insulated container 100 between the cold pack and its contents. For example, the cold pack may be a coolant material held actually within the skin of the container.

Further modifications and improvements may be incorporated without departing from the scope of the invention herein intended.

## Claims

1. An insulated container (100) having an inside surface, the inside surface being characterized in that is has a temperature regulation means (3) affixed thereon; the temperature regulation means comprising a heat-absorbent material the temperature of which can be adjusted before use; the temperature regulation means acting to slow the rate at which the temperature within the insulated container reverts to the temperature outside the insulated container.

2. An insulated container as claimed in Claim 1 wherein the temperature regulation means is an enclosed refreezable liquid.

3. An insulated container as claimed in any preceding Claim which is stackable wherein the box is stackable in such a way that boxes may nest inside each other and so take up less space than if they were not nesting.

4. An insulated container as claimed in any preceding Claim wherein the insulated container is made from a box (1) and a lid (2) wherein the temperature regulation means is affixed to the lid.

5. An insulated container as claimed in any preceding Claim which is double skinned.

6. An insulated container as claimed in any preceding claim having an additional layer between the temperature regulation means and the interior of the container.

7. An insulated container as claimed in any preceding Claim wherein the insulated container is reusable.

8. An insulated container as claimed in any preceding Claim wherein the insulated container is shaped so as to aid cleaning and does not have extrusions wherein microbes can readily gather.

9. An insulated container as claimed in any preceding Claim wherein the insulated container is recyclable.

10. An insulated container as claimed in any preceding Claim wherein the base (7) of the insulated container incorporates spacers (9) to provide a raised floor.
